# EUROPÄISCHE PATENTSCHRIFT

(11) **EP 4 009 662 B1**
(45) Veröffentlichungstag und Bekanntmachung des Hinweises auf die Patenterteilung: **15.11.2023**
(21) Anmeldenummer: 21212340.0
(22) Anmeldetag: 03.12.2021
(51) Int. Cl.: H04R 1/10, G02C 11/06

(54) **BRILLE MIT PARAMETRISCHER AUDIOEINHEIT**
SPECTACLES WITH PARAMETRIC AUDIO UNIT
LUNETTES POURVUES D'UNITÉ AUDIO PARAMÉTRIQUE

(30) Priorität: 04.12.2020 DE 102020132254
(43) Veröffentlichungstag der Anmeldung: 08.06.2022
(73) Patentinhaber: USound GmbH, 8020 Graz (AT)
(72) Erfinder: RUSCONI CLERICI BELTRAMI, Andrea, 1130 Wien (AT); BOTTONI, Ferruccio, 8020 Graz (AT)
(74) Vertreter: Canzler & Bergmeier Patentanwälte Partnerschaft mbB

(56) Entgegenhaltungen:
- JP-A- 2011 130 359
- KR-B1- 100 565 202
- US-A1- 2017 227 778
- US-B1- 8 750 541

## Beschreibung

Die vorliegende Erfindung betrifft eine Brille zur Ausgabe von Audioinformationen mit einem Brillenbügel, der zumindest einen Lautsprecher umfasst, wobei der Brillenbügel bei bestimmungsgemäßer Anordnung an einem dafür vorgesehenen Ohr von einer Ohröffnung des Ohrs beabstandet ist, so dass die vom Lautsprecher erzeugten Schallwellen über die Umgebung an die beabstandete Ohröffnung übertragen werden.

Aus der US 2014/0268016 A1 ist eine Brille zur Ausgabe von Audioinformationen bekannt, die einen in einen Brillenbügel integrierten Lautsprecher umfasst, der Schallwellen im hörbaren Wellenlängenspektrum aussendet. Bei bestimmungsgemäßer Anordnung der Brille ist der Lautsprecher von einer Ohröffnung des Ohrs des Benutzers beabstandet, so dass die vom Lautsprecher ausgesendeten hörbaren Schallwellen über die Umgebung an die beabstandete Ohröffnung übertragen werden müssen. Dies hat den Nachteil, dass die übertragenen Audioinformationen von in der Umgebung befindlichen Personen mitgehört werden können.

In der US 2014/0270316 A1 ist eine Brille offenbart, die einen Lautsprecher und ein akustisches Schallleitelement aufweist, mittels dem der von dem Lautsprecher erzeugte Schall zur Ohröffnung eines Benutzers geleitet werden kann, so dass nur der Benutzer diese Audioinformationen wahrnehmen kann. Das Schallleitelement erstreckt sich hierbei vom Bügel der Brille ausgehend in die Ohröffnung des Benutzers hinein. Nachteilig hierbei ist, dass durch die unmittelbare Anordnung des Schallleitelementes an der Ohröffnung Umgebungsgeräusche gedämpft werden. Des Weiteren wird es von Benutzern als störend empfunden, wenn das Audiosystem unmittelbar an der Ohröffnung oder in der Ohröffnung angeordnet ist.

Aus der US 8,750,541 B1 und JP 2011 130359 A ist jeweils eine Brille mit einem Ultraschalllautsprecher bekannt, mit dem ein Schallstrahl erzeugbar ist.

Aufgabe der vorliegenden Erfindung ist es, die aus dem Stand der Technik bekannten Nachteile zu beseitigen, insbesondere eine Brille zur Ausgabe von Audioinformationen zu schaffen, mittels der einem Benutzer Audioinformationen übermittelt werden können, ohne dass diese von in der Umgebung befindlichen Personen wahrnehmbar sind, relevante Umgebungsgeräusche nicht gedämpft werden und/oder der Tragekomfort nicht negativ beeinflusst wird.

Die Aufgabe wird gelöst durch eine Brille zur Ausgabe von Audioinformationen mit den Merkmalen des unabhängigen Patentanspruchs 1.

Vorgeschlagen wird eine Brille zur Ausgabe von Audioinformationen mit einem Brillenbügel, der zumindest einen Lautsprecher umfasst. Der Brillenbügel ist bei bestimmungsgemäßer Anordnung an einem dafür vorgesehenen Ohr von einer Ohröffnung des Ohrs beabstandet, so dass die vom Lautsprecher erzeugten Schallwellen über die Umgebung an die beabstandete Ohröffnung übertragen werden. Unter dem Begriff "Umgebung" ist der freie Luftraum zu verstehen, der die Brille umgibt und in dem sich der Schall frei ausbreiten kann. Die Brille umfasst demnach kein Schallleitelement, das sich vom Bügel der Brille ausgehend in die Ohröffnung des Benutzers hineinerstreckt. Stattdessen wird die Audioinformation von der Brille mittelbar über die Umgebung bzw. Umgebungsluft zur Ohröffnung übertragen.

Der Lautsprecher ist als Ultraschall-Lautsprecher ausgebildet. Mit diesem können demnach Schallwellen im Ultraschallbereich ausgesendet werden, die vom menschlichen Gehör nicht wahrnehmbar sind. Vorzugsweise ist der Ultraschall-Lautsprecher derart ausgebildet, dass mit diesem keine Schallwellen im hörbaren Wellenlängenspektrum ausgesendet werden können.

Des Weiteren weist die Brille eine den Ultraschall-Lautsprecher umfassende parametrische Audioeinheit auf. Die parametrische Audioeinheit ist derart ausgebildet, dass mit dieser ein auf das Ohr, insbesondere auf die Ohröffnung, gerichteter hörbarer Schallstrahl erzeugbar ist. Der hörbare Schallstrahl geht hierbei aus einem vom Ultraschall-Lautsprecher erzeugten Ultraschallstrahl hervor. Die parametrische Audioeinheit nutzt hierfür die Nichtlinearität der Schallausbreitung in Luft aus, um insbesondere mittels eines modulierten Ultraschallstrahls, vorzugsweise mittels eines modulierten Strahlungsdrucks, Hörschall zu erzeugen. Der von der parametrischen Audioeinheit erzeugte, stark gerichtete Schallstrahl ist im Wesentlichen frei von Nebenkeulen. Vorteilhafterweise können somit von der parametrischen Audioeinheit gezielt an den Benutzer Audioinformationen übermittelt werden, ohne dass diese von in der Nähe befindlichen Personen wahrgenommen werden können. Zugleich kann durch die berührungslose, d.h. vom Ohr des Benutzers beabstandete, Schallübertragung und dem damit einhergehenden hohen Tragekomfort eine sehr hohe Kundenakzeptanz erzielt werden. Die parametrische Audioeinheit ist demnach zur berührungslosen Schallübertragung ausgebildet. Der Benutzer muss keine störenden Elemente in unmittelbarer Nähe der Ohröffnung tragen, da die Audioinformationen aus einem vom Ohr beabstandeten Bereich über die Umgebung fokussiert an das Ohr, insbesondere in die Ohröffnung, übertragen werden. Dadurch, dass störende Elemente, wie beispielsweise ein Schallleitelement, in unmittelbarer Nähe der Ohröffnung vermieden werden, ist die Ohröffnung frei, so dass Umgebungsgeräusche ungehindert in die Ohröffnung eintreten können.

Vorteilhaft ist es, wenn die parametrische Audioeinheit derart ausgebildet ist, dass mit dieser mehrere in Schallausbreitungsrichtung des Schallstrahls hintereinander angeordnete virtuelle Hörschallquelle erzeugbar sind. Vorzugsweise ist die parametrische Audioeinheit derart ausgebildet, dass sich die virtuellen Hörschallquellen in Schallausbreitungsrichtung in Phase aufaddieren.

Infolgedessen werden die virtuellen Hörschallquellen in Schallausbreitungsrichtung mit zunehmendem Abstand vom Ultraschall-Schallwandler lauter. Außerhalb des Schallstrahls sind die virtuellen Hörschallquellen zueinander außer Phase und interferieren destruktiv.

Ferner ist es vorteilhaft, wenn die parametrische Audioeinheit derart ausgebildet ist, dass der vom Ultraschall-Lautsprecher erzeugte Schallstrahl eine, insbesondere modulierte, Primärwelle umfasst. Die Primärwelle ist vorzugsweise eine Ultraschallwelle. Zusätzlich oder alternativ ist es vorteilhaft, wenn die parametrische Audioeinheit derart ausgebildet ist, dass der vom Ultraschall-Lautsprecher erzeugte Schallstrahl eine Sekundärwelle umfasst. Vorzugsweise schließt sich die Sekundärwelle in Schallausbreitungsrichtung an die Primärwelle an. Des Weiteren handelt es sich bei der Sekundärwelle vorzugsweise um eine durch Luftabsorption demodulierte Hörschallwelle. Unter dem Begriff "Hörschall" ist Schall im für den Menschen hörbaren Wellenlängenspektrum zu verstehen. Vorzugsweise entsteht die Sekundärwelle aus der Primärwelle, die mit zunehmendem Abstand von dem Ultraschall-Lautsprecher durch Luftabsorption demoduliert und in Hörschall umgewandelt wird. Infolgedessen sind die Audioinformationen in einem zum Ultraschall-Lautsprecher benachbarten ersten Bereich nicht hörbar, wohingegen diese in einem in Schallausbreitungsrichtung dem ersten Bereich folgenden zweiten Bereich hörbar sind.

Vorteilhaft ist es, wenn die Primärwelle eine Absorptionslänge aufweist, die einer Entfernung vom Ultraschall-Lautsprecher entspricht, innerhalb der die Primärwelle und/oder der Ultraschall des Schallstrahls durch die Luft absorbiert wird. Durch molekulare Reibung und auch andere Moleküleigenschaften wird ein Teil der Schallenergie des Schallstrahls auf dem Weg durch die Luft absorbiert. Höhere Frequenzen, wie der Ultraschall, werden wesentlich stärker absorbiert als tiefe Frequenzen, wie der Hörschall. Bei einer Schallausbreitung in Schallausbreitungsrichtung wird die Primärwelle und/oder der Ultraschall des Schallstrahls demnach durch die Luft über die Absorptionslänge hinweg kontinuierlich und im Wesentlichen vollständig absorbiert, wohingegen die Sekundärwelle und/oder der Hörschall eine über die Absorptionslänge hinausgehende größere Reichweite hat.

Diesbezüglich ist es vorteilhaft, wenn bei bestimmungsgemäß angeordnetem Brillenbügel die Absorptionslänge der Primärwelle kleiner oder gleich einem Abstand zwischen dem Ultraschall-Lautsprecher und der Ohröffnung ist, wobei die Absorptionslänge insbesondere kleiner oder gleich 6 cm, 5,5 cm, 5 cm, 4,5 cm, 4 cm, 3,5 cm, 3 cm, 2,5 cm, 2 cm, 1,5 cm oder 1 cm ist. Hierdurch kann sichergestellt werden, dass die modulierte Primärwelle und/oder die modulierte Ultraschallwelle in einer Entfernung, in der sich die Ohröffnung befindet, ausreichend stark in Hörschall demoduliert ist, so dass im Bereich der Ohröffnung der demodulierte Hörschall vorliegt und vom Benutzer wahrgenommen werden kann.

Vorteilhaft ist es, wenn die parametrische Audioeinheit einen Modulator, insbesondere einen Audiosignalmodulator, umfasst, mit dem für den Ultraschall-Lautsprecher ein moduliertes Ultraschallsignal erzeugbar ist.

Vorzugsweise ist das modulierte Ultraschallsignal derart moduliert, dass die Primärwelle, die virtuellen Hörschallquellen und/oder die Sekundärwelle erzeugbar sind. Zusätzlich oder alternativ ist das modulierte Ultraschallsignal derart moduliert, dass der vom Ultraschall-Lautsprecher mit Hilfe des modulierten Ultraschallsignals erzeugte und ausgesendete modulierte Ultraschall mit zunehmender Entfernung vom Ultraschall-Lautsprecher und/oder aufgrund der Luftabsorption in Hörschall demoduliert wird.

Ferner ist es vorteilhaft, wenn das modulierte Ultraschallsignal derart ausgebildet ist, dass dieses bzw. die mit diesem Ultraschallsignal erzeugte Schallwelle in Schallausbreitungsrichtung mit zunehmender Entfernung vom Ultraschall-Lautsprecher aufgrund der Nichtlinearität der Schallausbreitung in Luft und/oder aufgrund der Luftabsorption in Hörschall demoduliert wird.

Ebenso ist es vorteilhaft, wenn der Modulator derart ausgebildet ist, dass dieser ein Ultraschall-Trägersignal, insbesondere eine Amplitude des Ultraschall-Trägersignals, anhand eines Audiosignals moduliert. Bei dem Audiosignal handelt es sich um ein Hörschallsignal und/oder um die an den Benutzer zu übertragenden Audioinformationen.

Vorteile bringt es zudem mit sich, wenn die parametrische Audioeinheit eine Signalquelle umfasst, die dem Modulator das Audiosignal bereitstellt, und/oder einen Oszillator umfasst, der dem Modulator das Ultraschall-Trägersignal bereitstellt.

Auch ist es von Vorteil, wenn die parametrische Audioeinheit zumindest einen Filter, insbesondere einen Hochpassfilter und/oder Tiefpassfilter, zum Filtern des Audiosignals aufweist.

Ferner ist es vorteilhaft, wenn die parametrische Audioeinheit zumindest einen Dynamikkompressor zur Verringerung einer Schwankungsbreite des, insbesondere gefilterten, Audiosignals umfasst.

In einer vorteilhaften Weiterbildung ist es ferner vorteilhaft, wenn die parametrische Audioeinheit einen Verstärker zum Verstärken des modulierten Ultraschallsignals umfasst.

Der Ultraschall-Lautsprecher ist ein, vorzugsweise piezoelektrischer, MEMS-Schallwandler zur Erzeugung von Ultraschall.

Des Weiteren ist es vorteilhaft, wenn der Ultraschall-Lautsprecher eine Schallachse aufweist, entlang der der Schallstrahl in Schallausbreitungsrichtung aussendbar ist. Ferner ist es vorteilhaft, wenn der Ultraschall-Lautsprecher derart am Brillenbügel angeordnet ist, dass der sich entlang der Schallachse ausbreitende Schallstrahl des Ultraschall-Lautsprechers bei bestimmungsgemäßer Anordnung des Brillenbügels auf die Ohröffnung gerichtet ist. Hierdurch wird sichergestellt, dass der Ultraschall-Lautsprecher direkt in die Ohröffnung strahlt und infolgedessen im Wesentlichen keine Audioinformationen von in der Umgebung befindlichen Personen mitgehört werden können.

Der Ultraschall-Lautsprecher umfasst zumindest ein in Richtung einer Hubachse auslenkbares Schallerzeugungselement zur Ultraschallerzeugung. Bei dem Schallerzeugungselement handelt es sich um einen, insbesondere piezoelektrischen, Kragarm, der mit nur einem seiner beiden Enden an einem Trägersubstrat festgelegt ist, so dass das andere Ende frei schwingen kann. Zusätzlich oder alternativ ist das Schallerzeugungselement als starre Hubplatte ausgebildet, die zur lotrechten Hubachse ausgelenkt werden kann.

In einer vorteilhaften Weiterbildung der Erfindung ist die Hubachse des Schallerzeugungselements parallel und/oder konzentrisch zur Schallachse des Ultraschall-Lautsprechers angeordnet.

Vorteilhaft ist es, wenn der Ultraschall-Lautsprecher eine Vielzahl von nebeneinander angeordneten Schallerzeugungselement aufweist. Diese bilden vorzugsweise eine gemeinsame Schallerzeugungsfläche des Ultraschall-Lautsprechers aus.

Das Schallerzeugungselement des Ultraschall-Lautsprechers ist an einer Außenseite des Brillenbügels, nämlich in einer Außenseitenvertiefung der Außenseite, angeordnet. Zusätzlich ist das Schallerzeugungselement plan oder bündig zur Außenseite angeordnet.

Vorteile bringt es mit sich, wenn die parametrische Audioeinheit einen elektronischen Chip, insbesondere einen ASIC, aufweist, der den Modulator, Filter, Dynamikkompressor und/oder Verstärker umfasst.

Vorteilhaft ist es, wenn der elektronische Chip in dem Trägersubstrat des MEMS-Schallwandlers eingebettet ist. Unter dem Begriff "eingebettet" ist zu verstehen, dass der elektronische Chip vollständig, d. h. von allen Seiten, vom Trägersubstrat umgeben ist.

Vorgeschlagen wird eine parametrische Audioeinheit zur Verwendung in einer Brille gemäß der vorangegangenen Beschreibung, wobei die genannten Merkmale einzeln oder in beliebiger Kombination vorhanden sein können.

Weitere Vorteile der Erfindung sind in den nachfolgenden Ausführungsbeispielen beschrieben. Es zeigen:
- **Figur 1**: eine schematische Seitenansicht einer Brille zur Ausgabe von Audioinformationen mit einer parametrischen Audioeinheit und
- **Figur 2**: eine Detailansicht der parametrischen Audioeinheit.

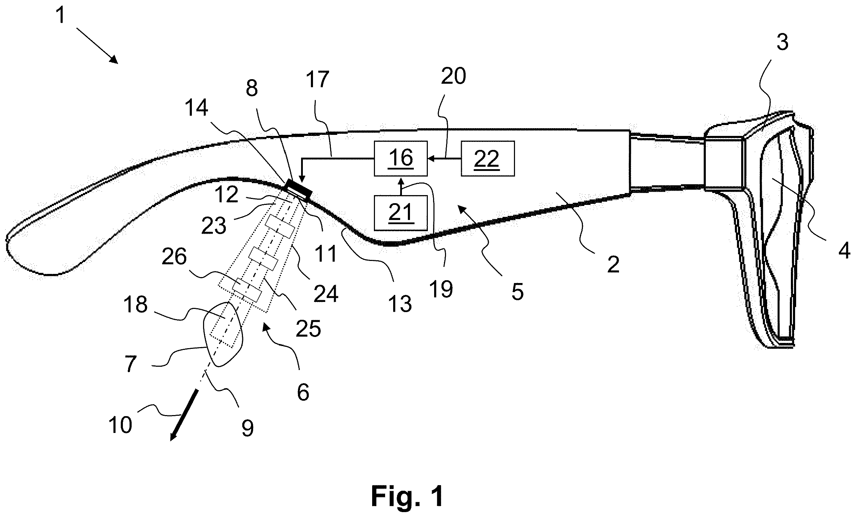

Figur 1 zeigt eine Brille 1 zur Ausgabe von Audioinformationen in einer Seitenansicht. Die Brille 1 umfasst zwei Brillenbügel 2, die an einem Tragegestell 3 für die Gläser 4 angeordnet sind. In der in Figur 1 dargestellten Seitenansicht ist nur einer der beiden Brillenbügel 2 ersichtlich. Die Brille 1 ist als Audiobrille ausgebildet. Die Brillenbügel 2 sind bei bestimmungsgemäßer Anordnung an einem dafür vorgesehenen Ohr eines Benutzers von einer Ohröffnung 7 beabstandet angeordnet. Infolgedessen müssen die Audioinformationen über die freie Umgebung an die beabstandete Ohröffnung 7 übertragen werden.

Zur Ausgabe der Audioinformationen umfasst die Brille 1 eine parametrische Audioeinheit 5, die in Figur 1 schematisch dargestellt ist. Der Begriff "parametrisch" bedeutet insbesondere, dass die Audioeinheit 5 Parameter aus einem Audiosignal 20, insbesondere eine Amplitude des Signals, gewinnt und/oder zur Erzeugung eines hörbaren Schallstrahls 6 verwendet. Wie nachfolgend noch im Detail erläutert, ist die parametrische Audioeinheit 5 derart ausgebildet, dass mit dieser der hörbare Schallstrahl 6 erzeugt werden kann. Gemäß Figur 1 ist dieser Schallstrahl 6 auf ein Ohr eines Benutzers ausgerichtet, wenn die Brille 1 bestimmungsgemäß am Kopf des Benutzers angeordnet ist. In Figur 1 ist schematisch die Ohröffnung 7 des Ohrs dargestellt. Der Schallstrahl 6 ist bei bestimmungsgemäßer Anordnung der Brille 1 auf diese Ohröffnung 7 des Ohrs ausgerichtet. Infolgedessen werden die Audioinformationen gezielt an das Ohr übermittelt, so dass in der Umgebung befindliche Personen nicht mithören können. Des Weiteren ist die parametrische Audioeinheit 5 berührungslos ausgebildet, wonach zwischen der parametrischen Audioeinheit 5 und dem Ohr keine körperlichen Schallübertragungselemente angeordnet sind. Stattdessen werden die Audioinformationen frei über die Umgebung übertragen. Unter dem Begriff "Umgebung" ist die die Brille 1 und das Ohr umgebende sowie die sich außerhalb der parametrische Audioeinheit 5 befindliche Luft zu verstehen. Vorteilhafterweise zeichnet sich die Brille 1 durch einen hohen Tragekomfort aus, da auf der Ohrmuschel oder in der Ohröffnung 7 keine schallleitenden, körperlichen Elemente angeordnet sind. Diese Tatsache hat den weiteren Vorteil, dass die Ohröffnung 7 nicht blockiert ist, so dass Außengeräusche, wie beispielsweise am Benutzer vorbeifahrende Fahrzeuge, auditiv wahrgenommen werden können.

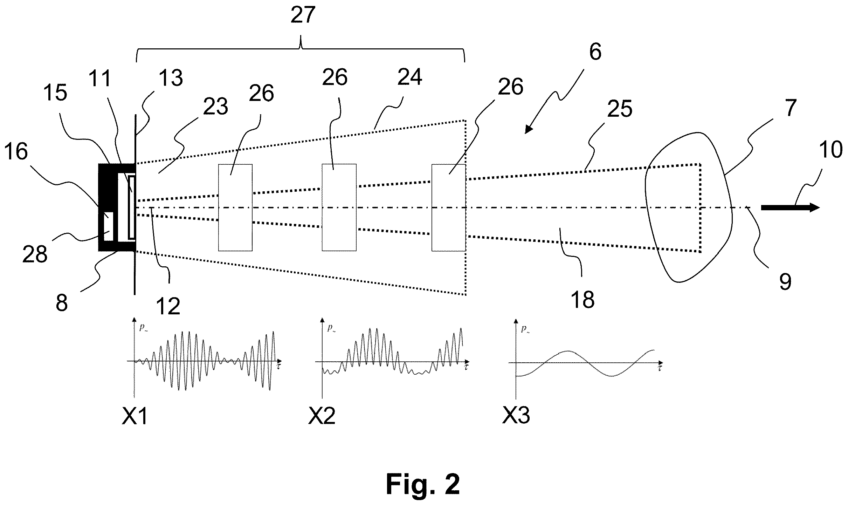

Gemäß Figur 1 umfasst die parametrische Audioeinheit 5 einen Ultraschall-Lautsprecher 8, der den Schallstrahl 6 erzeugt. In Figur 2 ist der Ultraschall-Lautsprecher 8 sowie der von diesem erzeugte Schallstrahl 6 nochmals in einer Detailansicht dargestellt.

Der Ultraschall-Lautsprecher 8 umfasst eine Schallachse 9. Entlang dieser Schallachse 9 kann der Ultraschall-Lautsprecher 8 in einer vom Brillenbügel 2 weggerichteten Schallerzeugungsrichtung 10 Ultraschallwellen aussenden. Wie aus Figur 1 hervorgeht, ist der Ultraschall-Lautsprecher 8 derart am Brillenbügel 2 angeordnet, dass der sich entlang der Schallachse 9 in Schallerzeugungsrichtung 10 ausbreitende Schallstrahl 6 bei bestimmungsgemäßer Anordnung des Brillenbügels 2 auf die Ohröffnung 7 gerichtet ist.

Zur Erzeugung des Ultraschalls umfasst der Ultraschall-Lautsprecher 8 zumindest ein Schallerzeugungselement 11, das entlang einer Hubachse 12 ausgelenkt werden kann. In dem vorliegenden Ausführungsbeispiel ist das Schallerzeugungselement 11 als starre Platte ausgebildet, zu der die Hubachse 12 lotrecht verläuft. Die Hubachse 12 des Schallerzeugungselements 11 ist parallel und/oder konzentrisch zur Schallachse 9 des Ultraschall-Lautsprechers 8 angeordnet. Gemäß dem vorliegenden Ausführungsbeispiel ist der Ultraschall-Lautsprecher 8 und/oder dessen Schallerzeugungselement 11 derart am Brillenbügel 2 angeordnet, dass das Schallerzeugungselement 11 seine Schallwellen unmittelbar an die Umgebung übertragen kann. Hierfür ist der Ultraschall-Lautsprecher 8, insbesondere sein Schallerzeugungselement 11, an einer Außenseite 13 des Brillenbügels 2 angeordnet. Das Schallerzeugungselement 11 des Ultraschall-Lautsprechers 8 ist in einer Außenseitenvertiefung 14 des Brillenbügels 2 angeordnet. Ferner ist das Schallerzeugungselement 11 plan oder bündig zur Außenseite 13 des Brillenbügels 2 angeordnet.

Vorliegend ist der Ultraschall-Lautsprecher 8 als MEMS-Schallwandler zur Erzeugung von Ultraschall ausgebildet. Er umfasst ein Trägersubstrat 15 gegenüber dem das Schallerzeugungselement 11 entlang der Hubachse 12 ausgelenkt werden kann. Vorzugsweise umfasst der MEMS-Schallwandler einen vorliegend nicht dargestellten, piezoelektrischen Aktor, der als das Schallerzeugungselement 11 ausgebildet ist, in dieses integriert ist oder mit diesem gekoppelt ist.

Gemäß Figur 1 umfasst die parametrische Audioeinheit 5 einen Modulator 16. Mit diesem kann die parametrische Audioeinheit 5 ein moduliertes Ultraschallsignal 17 erzeugen, mit dem der Ultraschall-Lautsprecher 8 zur Erzeugung von Ultraschall 23 angesteuert werden kann. Der Modulator 16 ist vorzugsweise als Chip 28 ausgebildet. Dieser Chip 28 ist gemäß Figur 2 vorzugsweise in das Trägersubstrat 15 eingebettet.

Das modulierte Ultraschallsignal 17 ist derart moduliert, dass der vom Ultraschall-Lautsprecher 8 erzeugte Ultraschall 23 -je weiter er sich in Schallausbreitungsrichtung 10 vom Ultraschall-Lautsprecher 8 entfernt - durch die Luft absorbiert wird und hierdurch in Hörschall 18 umgewandelt bzw. demoduliert wird. Die parametrische Audioeinheit 5 nutzt demnach die Nichtlinearitäten der Schallausbreitung in Luft, um mittels des modulierten Ultraschallstrahls Hörschall zu erzeugen.

Gemäß Figur 1 verwendet der Modulator 16 zur Erzeugung des modulierten Ultraschallsignals 17 ein Ultraschall-Trägersignal 19 und das die Audioinformationen umfassende Audiosignal 20. Das Ultraschall-Trägersignal 19 wird dem Modulator 16 von einem Oszillator 21 bereitgestellt. Ferner umfasst die parametrische Audioeinheit 5 eine Signalquelle 22, die dem Modulator 16 das Audiosignal 20 bereitstellt.

Der Modulator 16 ist derart ausgebildet, dass dieser das Ultraschall-Trägersignal 19 anhand des Audiosignals 20 derart moduliert, dass insbesondere unter Berücksichtigung der Luftabsorption und/oder der Nichtlinearitäten der Schallausbreitung in Luft die vom Ultraschall-Lautsprecher 8 ausgesendete Ultraschallwelle - vorzugsweise in einem definierten Abstand vom Ultraschall-Lautsprecher 8 - in Hörschall 18 bzw. in eine Hörschallquelle demoduliert ist, die die Audioinformationen des Audiosignals 20 wiedergibt. Hierfür moduliert der Modulator 16 insbesondere eine Amplitude des Ultraschall-Trägersignals 19 mit dem Audiosignal 20.

Wie aus Figur 1 und 2 hervorgeht, erzeugt der mit dem modulierten Ultraschallsignal 17 angesteuerte Ultraschall-Lautsprecher 8 den Schallstrahl 6. Der Schallstrahl 6 umfasst eine Primärwelle 24 und eine Sekundärwelle 25. Die Primärwelle 24 ist ein Ultraschallstrahl mit nichtlinearer Interaktion. Die Sekundärwelle 25 ist ein Hörschallstrahl. Der Schallstrahl 6 umfasst mehrere - insbesondere anhand der Primärwelle 24 ausgebildete und/oder in Schallausbreitungsrichtung 10 hintereinander angeordnete - virtuelle Hörschallquellen 26. Diese addieren sich in Schallausbreitungsrichtung 10 in Phase, so dass die virtuellen Hörschallquellen 26 mit zunehmendem Abstand vom Ultraschall-Lautsprecher 8 lauter werden. So breitet sich die Ultraschallwelle und die durch diese angeregte Hörschallquelle mit derselben Schallgeschwindigkeit aus, so dass sich alle Elementarwellen in Schallausbreitungsrichtung 10 in Phase befinden, was wiederum eine konstruktive Überlagerung der einzelnen Audioelementarwellen in Schallausbreitungsrichtung 10 zur Folge hat. Diese Phasenbeziehung gilt in allen anderen Richtungen nicht, so dass sich diese Elementarwellen destruktiv überlagern. Hierdurch wird die starke Richtwirkung der Sekundärwelle 25 bzw. der Hörschallwelle erzielt.

Wie insbesondere aus Figur 2 hervorgeht, weist die Primärwelle 24 eine Absorptionslänge 27 auf. Die Absorptionslänge 27 beschreibt hierbei die Länge der nichtlinearen Wechselwirkungsstrecke in Ausbreitungsrichtung der Primärwelle 24 bzw. des primären Ultraschallstrahls. Innerhalb dieser Absorptionslänge 27 wird die Primärwelle 24 durch die Luft absorbiert und/oder hierdurch die Sekundärwelle 25 bzw. der Hörschall 18 generiert. Vorteilhaft ist es, wenn, wie insbesondere in Figur 1 dargestellt, die Absorptionslänge 27 der Primärwelle 24 kleiner oder gleich einem Abstand zwischen dem Ultraschall-Lautsprecher 8 und der Ohröffnung 7 ist. Hierdurch kann sichergestellt werden, dass der Ultraschall 23 in Hörschall 18 umgewandelt wurde, bevor er auf die Ohröffnung 7 trifft.

In Figur 2 ist exemplarisch für drei unterschiedliche Abstände X1, X2 und X3 die mit der Entfernung zum Ultraschall-Lautsprecher 8 fortschreitende Selbstdemodulation einer einzelnen modulierten Schwingung anhand der zeitlichen Verläufe der Wellenform verdeutlicht. In dem ersten Abstand X1 ist die vom Ultraschall-Lautsprecher 8 erzeugte Schallwelle durch das modulierte Ultraschallsignal 17 geprägt. Es ist noch deutlich die modulierte Trägerwelle des Ultraschall-Trägersignals 19 zu erkennen. Mit zunehmender Entfernung führt die Selbstdemodulation innerhalb der Absorptionslänge 27 bei einem größeren zweiten Abstand X2 zu einer Überlagerung des modulierten Ultraschallsignals bzw. Ultraschall-Trägersignals 19 mit dem Audiosignal 20. Mit weiter zunehmender Entfernung erfährt die Ultraschallwelle bzw. das Ultraschall-Trägersignal 19 schließlich eine deutlich stärkere Dämpfung als die Hörschallwelle und verschwindet schließlich bei Überschreiten der Absorptionslänge 27, so dass in einem Abstand X3 ausschließlich das Audiosignal 20 feststellbar ist.

### Bezugszeichenliste

- 1: Brille
- 2: Brillenbügel
- 3: Tragegestell
- 4: Gläser
- 5: parametrische Audioeinheit
- 6: Schallstrahl
- 7: Ohröffnung
- 8: Ultraschall-Lautsprecher
- 9: Schallachse
- 10: Schallerzeugungsrichtung
- 11: Schallerzeugungselement
- 12: Hubachse
- 13: Außenseite
- 14: Außenseitenvertiefung
- 15: Trägersubstrat
- 16: Modulator
- 17: moduliertes Ultraschallsignal
- 18: Höhrschall
- 19: Ultraschall-Trägersignal
- 20: Audiosignal
- 21: Oszillator
- 22: Signalquelle
- 23: Ultraschall
- 24: Primärwelle
- 25: Sekundärwelle
- 26: virtuelle Hörschallquellen
- 27: Absorptionslänge
- 28: Chip

- X1: erster Abstand
- X2: zweiter Abstand
- X3: dritter Abstand

## Patentansprüche

1. Brille (1) zur Ausgabe von Audioinformationen mit einem Brillenbügel (2),
der zumindest einen Lautsprecher umfasst,
wobei der Brillenbügel (2) bei bestimmungsgemäßer Anordnung an einem dafür vorgesehenen Ohr von einer Ohröffnung (7) beabstandet ist, so dass die vom Lautsprecher erzeugten Schallwellen über die Umgebung an die beabstandete Ohröffnung (7) übertragen werden,
wobei der Lautsprecher ein Ultraschall-Lautsprecher (8) ist, der zumindest ein in Richtung einer Hubachse (12) auslenkbares Schallerzeugungselement (11) zur Ultraschallerzeugung umfasst, und
wobei die Brille (1) eine den Ultraschall-Lautsprecher (8) umfassende parametrische Audioeinheit (5) aufweist, mit der ein auf das Ohr gerichteter hörbarer Schallstrahl (6) erzeugbar ist,
**dadurch gekennzeichnet,**
**dass** der Ultraschall-Lautsprecher (8) ein MEMS-Schallwandler zur Erzeugung von Ultraschall ist,
wobei das Schallerzeugungselement (11) des MEMS-Schallwandlers als Kragarm ausgebildet ist, der mit nur einem seiner beiden Enden an einem Trägersubstrat (15) des MEMS-Schallwandlers festgelegt ist, so dass das andere Ende frei schwingen kann, und
**dass** das Schallerzeugungselement (11) des Ultraschall-Lautsprechers (8) in einer Außenseitenvertiefung (14) einer Außenseite (13) des Brillenbügels (2) plan oder bündig zur Außenseite (13) angeordnet ist.

2. Brille nach Anspruch 1, **dadurch gekennzeichnet,**
**dass** die parametrische Audioeinheit (5) derart ausgebildet ist, dass der vom Ultraschall-Lautsprecher (8) erzeugte Schallstrahl (6) eine Primärwelle (24) und eine sich an diese in Schallausbreitungsrichtung (10) anschließende, durch Luftabsorption demodulierte Sekundärwelle (25) umfasst.

3. Brille nach einem der vorherigen Ansprüche, **dadurch gekennzeichnet, dass** bei bestimmungsgemäß angeordnetem Brillenbügel (2) eine Absorptionslänge (27) der Primärwelle (24) kleiner oder gleich einem Abstand zwischen dem Ultraschall-Lautsprecher (8) und der Ohröffnung (7) ist, wobei die Absorptionslänge (27) insbesondere kleiner oder gleich 5 cm, 4 cm, 3 cm oder 2 cm ist.

4. Brille nach einem der vorherigen Ansprüche, **dadurch gekennzeichnet, dass** die parametrische Audioeinheit (5) einen Modulator (16) umfasst, mit dem für den Ultraschall-Lautsprecher (8) ein moduliertes Ultraschallsignal (17) erzeugbar ist.

5. Brille nach Anspruch 4, **dadurch gekennzeichnet,**
**dass** das modulierte Ultraschallsignal (17) derart ausgebildet ist, dass dieses in Schallausbreitungsrichtung (10) mit zunehmender Entfernung vom Ultraschall-Lautsprecher (8) aufgrund von Luftabsorption in Hörschall (18) demoduliert wird.

6. Brille nach einem der Ansprüche 4 oder 5, **dadurch gekennzeichnet,**
**dass** der Modulator (16) derart ausgebildet ist, dass dieser ein Ultraschall-Trägersignal (19), insbesondere eine Amplitude des Ultraschall-Trägersignals (19), anhand eines Audiosignals (20) moduliert.

7. Brille nach Anspruch 6, **dadurch gekennzeichnet,**
**dass** die parametrische Audioeinheit (5) eine Signalquelle (22) umfasst, die dem Modulator (16) das Audiosignal (20) bereitstellt, und/oder
einen Oszillator (21) umfasst, der dem Modulator (16) das Ultraschall-Trägersignal (19) bereitstellt.

8. Brille nach einem der Ansprüche 6 oder 7, **dadurch gekennzeichnet,**
**dass** die parametrische Audioeinheit (5) zumindest einen Filter, insbesondere einen Hochpassfilter und/oder Tiefpassfilter, zum Filtern des Audiosignals (20),
zumindest einen Dynamikkompressor zur Verringerung einer Schwankungsbreite des, insbesondere gefilterten, Audiosignals (20) und/oder einen Verstärker zum Verstärken des modulierten Ultraschallsignals umfasst.

9. Brille nach einem der vorherigen Ansprüche, **dadurch gekennzeichnet,**
**dass** der Ultraschall-Lautsprecher (8) eine Schallachse (9) aufweist, entlang der der Schallstrahl (6) in Schallausbreitungsrichtung (10) aussendbar ist und/oder
**dass** der Ultraschall-Lautsprecher (8) derart am Brillenbügel (2) angeordnet ist, dass der sich entlang der Schallachse (9) ausbreitende Schallstrahl (6) des Ultraschall-Lautsprechers bei bestimmungsgemä-ßer Anordnung des Brillenbügels (2) auf die Ohröffnung (7) gerichtet ist.

10. Brille nach Anspruch 9, **dadurch gekennzeichnet,**
**dass** die Hubachse (12) des Schallerzeugungselements (11) parallel und/oder konzentrisch zur Schallachse (9) des Ultraschall-Lautsprechers (8) angeordnet ist.

11. Brille nach Anspruch 8, **dadurch gekennzeichnet,**
**dass** die parametrische Audioeinheit (5) einen elektronischen Chip (28), insbesondere einen ASIC, aufweist, der den Modulator (16), Filter, Dynamikkompressor und/oder Verstärker umfasst.

## Claims

1. Eyewear (1) for outputting audio information
having an eyewear temple (2),
which includes at least one loudspeaker,
wherein the eyewear temple (2), when placed as intended at an ear intended therefor, is spaced apart from an ear opening (7), so the sound waves generated by the loudspeaker are transmitted over the surroundings to the spaced ear opening (7),
wherein the loudspeaker is an ultrasonic loudspeaker (8), including at least one sound-generating element (11), which is deflectable in the direction of a stroke axis (12), for generating ultrasound and
wherein the eyewear (1) have a parametric audio unit (5) including the ultrasonic loudspeaker (8),
with which an audible sound beam (6) directed toward the ear is generatable
**characterized in that**
the ultrasonic loudspeaker (8) is a MEMS sound transducer for generating ultrasound,
wherein the sound generating element (11) of the MEMS sound transducer is implemented as a cantilever arm which is fixed with only one of its two ends to a support substrate (15) of the MEMS sound transducer so that the other end is free to oscillate, and
that the sound-generating element (11) of the ultrasonic loudspeaker (8) is arranged at an outer-side recess (14 of an outer side (13) of the eyewear temple (2) in a planar or flush manner with respect to the outer side (13).

2. The eyewear of claim 1, **characterized in that** the parametric audio unit (5) is designed in such a way that the sound beam (6) generated by the ultrasonic loudspeaker (8) includes a primary wave (24) and a secondary wave (25) following the primary wave (24) in the sound propagation direction (10), which is demodulated due to air absorption.

3. The eyewear of one of the preceding claims, **characterized in that**, when the eyewear temple (2) is placed as intended, an absorption length (27) of the primary wave (24) is less than or equal to a distance between the ultrasonic loudspeaker (8) and the ear opening (7), wherein the absorption length (27) is, in particular, less than or equal to 5 cm, 4 cm, 3 cm, or 2 cm.

4. The eyewear of one of the preceding claims, **characterized in that** the parametric audio unit (5) includes a modulator (16), with which a modulated ultrasonic signal (17) is generatable for the ultrasonic loudspeaker (8).

5. The eyewear of claim 4, **characterized in that** the modulated ultrasonic signal (17) is designed in such a way that it is demodulated into audible sound (18) in the sound propagation direction (10) with increasing distance from the ultrasonic loudspeaker (8) due to the air absorption.

6. The eyewear of one of the claims 4 or 5, **characterized in that** the modulator (16) is designed in such a way that it modulates an ultrasonic carrier signal (19), in particular an amplitude of the ultrasonic carrier signal (19), on the basis of an audio signal (20).

7. The eyewear of claim 6, **characterized in that** the parametric audio unit (5) includes a signal source (22), which provides the audio signal (20) to the modulator (16), and/or
includes an oscillator (21), which provides the ultrasonic carrier signal (19) to the modulator (16).

8. The eyewear of one of the claims 6 or 7, **characterized in that** the parametric audio unit (5) includes at least one filter, in particular a high-pass filter and/or a low-pass filter, for filtering the audio signal (20),
at least one dynamic compressor for reducing a fluctuation range of the, in particular filtered, audio signal (20), and/or
an amplifier for amplifying the modulated ultrasonic signal.

9. The eyewear of one of the preceding claims, **characterized in that** the ultrasonic loudspeaker (8) has a sound beam axis (9), along which the sound beam (6) is emittable in the sound propagation direction (10), and/or
the ultrasonic loudspeaker (8) is arranged at the eyewear temple (2) in such a way that the sound beam (6) of the ultrasonic loudspeaker propagating along the sound beam axis (9) is directed toward the ear opening (7) when the eyewear temple (2) is placed as intended.

10. The eyewear of claim 9, **characterized in that** the stroke axis (12) of the sound-generating element (11) is arranged in parallel and/or concentrically to the sound beam axis (9) of the ultrasonic loudspeaker (8).

11. The eyewear of claim 8, **characterized in that** the parametric audio unit (5) has an electronic chip (28), in particular an ASIC, which includes the modulator (16), filter, dynamic compressor, and/or amplifier.

## Revendications

1. Lunettes (1) pour la sortie d'informations audio,
avec une branche de lunettes (2),
qui comprend au moins un haut-parleur,
la branche de lunettes (2), lorsqu'elle est disposée conformément à sa destination sur une oreille prévue à cet effet, étant distante d'une ouverture d'oreille (7), de sorte que les ondes acoustiques générées par le haut-parleur sont transmises via l'environnement à l'ouverture d'oreille distante (7),
le haut-parleur étant un haut-parleur à ultrasons (8) qui comprend au moins un élément générateur de sons (11) pouvant être dévié dans la direction d'un axe de course (12) pour générer des ultrasons, et
les lunettes (1) comportant une unité audio paramétrique (5) comprenant le haut-parleur à ultrasons (8), avec laquelle un rayon sonore audible (6) dirigé vers l'oreille peut être généré,
**caractérisées en ce que**
le haut-parleur à ultrasons (8) est un transducteur acoustique MEMS destiné à la production d'ultrasons,
l'élément générateur de sons (11) du transducteur acoustique MEMS étant réalisé sous la forme d'un bras en porte-à-faux qui est fixé par une seule de ses deux extrémités à un substrat de support (15) du transducteur acoustique MEMS, de sorte que l'autre extrémité peut vibrer librement, et
**en ce que** l'élément générateur de son (11) du haut-parleur à ultrasons (8) est disposé dans un creux latéral extérieur (14) d'un côté extérieur (13) de la branche (2) de lunettes, à plat ou à fleur sur le côté extérieur (13).

2. Lunettes selon la revendication 1, **caractérisées en ce que** l'unité audio paramétrique (5) est conçue de sorte que le rayon sonore (6) généré par le haut-parleur à ultrasons (8) comprend une onde primaire (24) et une onde secondaire (25) démodulée par absorption atmosphérique et s'enchaînant à celle-ci dans la direction de propagation du son (10).

3. Lunettes selon l'une quelconque des revendications précédentes, **caractérisées en ce que**, lorsque la branche (2) de lunettes est disposée conformément à sa destination, une longueur d'absorption (27) de l'onde primaire (24) est inférieure ou égale à une distance entre le haut-parleur à ultrasons (8) et l'ouverture d'oreille (7), la longueur d'absorption (27) étant en particulier inférieure ou égale à 5 cm, 4 cm, 3 cm ou 2 cm.

4. Lunettes selon l'une quelconque des revendications précédentes, **caractérisées en ce que** l'unité audio paramétrique (5) comprend un modulateur (16) avec lequel un signal ultrasonore modulé (17) pour le haut-parleur à ultrasons (8) peut être généré.

5. Lunettes selon la revendication 4, **caractérisées en ce que** le signal ultrasonore modulé (17) est conçu de sorte que celui-ci est démodulé en son audible (18) dans la direction de propagation du son (10) en raison de l'absorption atmosphérique, à mesure que l'on s'éloigne du haut-parleur à ultrasons (8).

6. Lunettes selon l'une quelconque des revendications précédentes 4 ou 5 précédentes, **caractérisées en ce que** le modulateur (16) est conçu de manière à moduler un signal porteur ultrasonore (19), en particulier une amplitude du signal porteur ultrasonore (19), à l'aide d'un signal audio (20).

7. Lunettes selon la revendication 6, **caractérisées en ce que** l'unité audio paramétrique (5) comprend une source de signaux (22) qui fournit au modulateur (16) le signal audio (20), et/ou
un oscillateur (21) qui fournit le signal porteur ultrasonore (19) au modulateur (16).

8. Lunettes selon l'une quelconque des revendications 6 ou 7, **caractérisées en ce que** l'unité audio paramétrique (5) comprend au moins un filtre, en particulier un filtre passe-haut et/ou un filtre passe-bas, pour filtrer le signal audio (20),
au moins un compresseur dynamique pour réduire une marge de fluctuation du signal audio (20), en particulier filtré, et/ou un amplificateur pour amplifier le signal ultrasonore modulé.

9. Lunettes selon l'une quelconque des revendications précédentes, **caractérisées en ce que** le haut-parleur à ultrasons (8) présente un axe sonore (9) le long duquel le rayon sonore (6) peut être émis dans la direction de propagation du son (10) et/ou
**en ce que** le haut-parleur à ultrasons (8) est disposé sur la branche (2) de lunettes de sorte que le rayon sonore (6) du haut-parleur à ultrasons, qui se propage le long de l'axe sonore (9), est dirigé sur l'ouverture d'oreille (7) lorsque la branche (2) de lunette est disposée conformément à sa destination.

10. Lunettes selon la revendication 9, **caractérisées en ce que** l'axe de course (12) de l'élément générateur de sons (11) est disposé parallèlement et/ou concentriquement à l'axe sonore (9) du haut-parleur à ultrasons (8).

11. Lunettes selon la revendication 8, **caractérisées en ce que** l'unité audio paramétrique (5) comporte une puce électronique (28), en particulier un ASIC, qui comprend le modulateur (16), le filtre, le compresseur dynamique et/ou l'amplificateur.
